# EUROPEAN PATENT APPLICATION

(11) **EP 4 717 953 A1**
(43) Date of publication of application: **01.04.2026**
(21) Application number: 24813693.9
(22) Date of filing: 12.01.2024
(51) Int. Cl.: F16K 15/02

(54) **DRAIN VALVE, BATTERY, AND ELECTRIC DEVICE**

(30) Priority: 31.05.2023 CN 202310640714
(71) Applicant: Contemporary Amperex Technology Co., Limited, Ningde, Fujian 352100 (CN)
(72) Inventor: ZHANG, Luo, Ningde, Fujian 352100 (CN); KE, Qingpeng, Ningde, Fujian 352100 (CN); HUANG, Jiawei, Ningde, Fujian 352100 (CN); XIA, Qinglei, Ningde, Fujian 352100 (CN)
(74) Representative: Gong, Jinping
(86) International application number: PCT/CN2024/072120
(87) International publication number: WO 2024/244487

(57) **Abstract**

A drain valve (13), a battery (100), and an electric device are provided, pertaining to the field of battery technology. The drain valve includes a valve body (131), a valve core (132), a gas-generating substance (133), and a check member (135). The valve body has a liquid inlet (1311) and a liquid outlet (1312). The valve core movably fits with the valve body to close the liquid outlet. The gas-generating substance is at least partially disposed within the valve body, and the gas-generating substance is configured to react with liquid water to generate a gas so as to push the valve core to open the liquid outlet. The check member is configured to allow the liquid water to enter the valve body from the liquid inlet and restrict gas from flowing out of the valve body through the liquid inlet. The gas-generating substance reacts with the liquid water to produce the gas, and the check member restricts the gas from flowing out of the valve body through the liquid inlet. As the gas increases, the pressure inside the valve body gradually increases, thereby pushing the valve core to move and open the liquid outlet, and allowing the liquid water to be discharged from the battery through the liquid outlet. This reduces the risk of leaked liquid water inside the battery causing a short circuit in a battery cell, which otherwise leads to an increase in the temperature of the battery and thus causes a fire in the battery, thereby improving the reliability of the battery during use.

## Description

### CROSS-REFERENCE TO RELATED APPLICATIONS

This application claims priority to Chinese Patent Application No. 202310640714.8, filed on May 31, 2023 and entitled "DRAIN VALVE, BATTERY, AND ELECTRIC DEVICE," which is incorporated herein by reference in its entirety.

### TECHNICAL FIELD

This application relates to the field of battery technology, and specifically, to a drain valve, a battery, and an electric device.

### BACKGROUND

Batteries are widely used in electronic devices, such as electric bicycles, electric vehicles, electric airplanes, electric ships, and electric tools.

In the development of battery technology, in addition to improving battery performance, the reliability of batteries during use is also an issue that needs to be considered.

Therefore, how to improve the reliability of batteries during use is an urgent issue to be solved in battery technology.

### SUMMARY

In view of the above issues, this application provides a drain valve, a battery, and an electric device, which can improve the reliability of the battery during use.

According to a first aspect, this application provides a drain valve, where the drain valve includes a valve body, a valve core, a gas-generating substance, and a check member; the valve body has a liquid inlet and a liquid outlet; the valve core movably fits with the valve body to close the liquid outlet; the gas-generating substance is at least partially disposed within the valve body, and the gas-generating substance is configured to be able to react with liquid water to generate a gas so as to push the valve core to open the liquid outlet; and the check member is configured to allow the liquid water to enter the valve body from the liquid inlet and restrict the gas from flowing out of the valve body through the liquid inlet.

In the technical solutions of the embodiments of this application, the drain valve includes the valve body, the valve core, the gas-generating substance, and the check member; the valve body has the liquid inlet and the liquid outlet; the valve core movably fits with the valve body to close the liquid outlet; the gas-generating substance is at least partially disposed within the valve body, and the gas-generating substance is configured to react with the liquid water to generate the gas so as to push the valve core to open the liquid outlet; and the check member is configured to allow the liquid water to enter the valve body from the liquid inlet and restrict the gas from flowing out of the valve body through the liquid inlet. In an example where the drain valve is applied to a battery, the gas-generating substance reacts with the liquid water to produce the gas, and the check member restricts the gas from flowing out of the valve body through the liquid inlet. As the gas generated by the gas-generating substance increases, the pressure inside the valve body gradually increases, thereby pushing the valve core to move and open the liquid outlet, and allowing the liquid water to be discharged from the battery through the liquid outlet. This reduces the risk of leaked liquid water inside the battery causing a short circuit in a battery cell, which otherwise leads to an increase in the temperature of the battery and thus causes a fire in the battery, thereby improving the reliability of the battery during use.

In some embodiments, the check member is disposed on a path between the liquid inlet and the gas-generating substance.

In some embodiments, the drain valve further includes an elastic member connected to the valve core and the valve body and configured to apply an elastic force to the valve core to maintain the valve core at a position where the liquid outlet is closed. In an example where the drain valve is applied to a battery, when there is no liquid water leakage inside the battery, the elastic member can maintain the valve core in the position where the liquid outlet is closed, reducing the risk of foreign objects or liquids outside a box of the battery entering the box of the battery and causing a short circuit in the battery cell, which otherwise leads to an increase in the temperature of the battery and thus causes a fire in the battery.

In some embodiments, the valve body defines a first chamber in communication with the liquid inlet; the valve core and the valve body together define a second chamber; the valve body is provided with a communication port for enabling a communication between the first chamber and the second chamber; and the gas-generating substance is disposed in the second chamber. This design ensures that the liquid water can only enter the second chamber through the communication port to react with the gas-generating substance by flowing through at least the first chamber, thereby extending, to some extent, a flow path of the liquid water inside the drain valve when the drain valve is opened, and reducing the risk of accidental opening of the drain valve.

In some embodiments, the check member is disposed on a path between the first chamber and the second chamber, and the check member is configured to allow the liquid water to flow from the first chamber into the second chamber and restrict the gas from flowing out of the second chamber. With this design, in an example where the drain valve is applied to a battery, the gas generated by the gas-generating substance cannot flow out of the second chamber, allowing the pressure in the second chamber to increase rapidly within a period of time, thereby shortening the time required for opening the drain valve.

In some embodiments, the check member is disposed at the communication port. This design allows the communication port to serve as a reference during the assembly of the check member, reducing the difficulty of assembling the check member.

In some embodiments, the check member is a one-way membrane covering the communication port. This design allows the one-way membrane to be adhered near the communication port and cover the communication port, thereby allowing the liquid water to flow from the first chamber into the second chamber, and restricting the gas from flowing out of the second chamber. No additional assembly groove needs to be machined on a wall of the valve body or valve core, so that the assembly difficulty is relatively low.

In some embodiments, the valve body includes a top wall and a sidewall surrounding the top wall; the liquid inlet is provided on the sidewall and/or the top wall; and an end of the sidewall away from the top wall encloses the liquid outlet. This design allows the liquid inlet to be provided at any position along a circumferential direction of the sidewall and/or on the top wall, allowing an opening direction of the liquid inlet to be flexibly arranged according to different products.

In some embodiments, the valve body further includes a partition wall and a connecting portion; the partition wall is located within a space enclosed by the top wall and the sidewall; the partition wall is spaced apart from the top wall; the connecting portion connects the top wall and the partition wall; the first chamber is formed between the partition wall and the top wall; the valve core and the partition wall enclose the second chamber; and the communication port is provided on the partition wall. With this design, since the liquid inlet is provided on the sidewall and/or the top wall and the communication port is provided on the partition wall, the liquid can only enter the second chamber by sequentially passing through the liquid inlet and the communication port, further extending a flow path required for the liquid to be in contact with the gas-generating substance within the valve body, and reducing the risk of the drain valve being opened due to a small amount of liquid in the box, which otherwise leads to an excessively short service life of the drain valve.

In some embodiments, the valve core includes a sleeve portion and a piston portion; the sleeve portion is sleeved on the partition wall and is in sliding fit with the partition wall; the piston portion is connected to an end of the sleeve portion away from the top wall; the piston portion is configured to close or open the liquid outlet; and the sleeve portion, the partition wall, and the piston portion enclose the second chamber. This design makes a space of the second chamber smaller than a space of the first chamber, reducing the time required for the gas to fill the second chamber and push the valve core to move, and allowing the valve core to move faster and open the liquid outlet. In an example where the drain valve is applied to a battery, the opening time of the drain valve is reduced, thereby reducing the risk of a short circuit in a battery cell due to accumulation of a large amount of liquid within a box of the battery caused by an excessively long opening time of the drain valve.

In some embodiments, a gap is formed between an outer peripheral surface of the sleeve portion and an inner peripheral surface of the sidewall; the sleeve portion is provided with a flow guide port; the liquid inlet is provided on the sidewall; and the liquid inlet is in communication with the first chamber through the gap and the flow guide port. This design ensures that the liquid water can only enter the second chamber by flowing through at least the liquid inlet, the gap, the flow guide port, and the communication port, further extending a flow path required for the liquid water to react with the gas-generating substance within the valve body, reducing the risk of the drain valve being opened due to a small amount of liquid water in the box, which otherwise leads to an excessively short service life of the drain valve.

In some embodiments, along a radial direction of the sleeve portion, the piston portion protrudes from the outer peripheral surface of the sleeve portion. With this design, in an embodiment where part of the valve core is located within the valve body, a liquid can enter the drain valve through the liquid inlet and be discharged through the liquid outlet. During the normal drainage process of the drain valve, the opening time of the drain valve is shortened, improving the drainage efficiency.

In some embodiments, a sealing member is disposed between an outer peripheral surface of the piston portion and the inner peripheral surface of the sidewall. This design requires only controlling the cylindricity of the piston portion without controlling the flatness of the piston portion, resulting in a relatively small machining area and relatively low machining difficulty.

In some embodiments, the drain valve includes a protective member, and the protective member is disposed on a side of the piston portion facing away from the top wall. This reduces the risk of the piston portion being scratched and damaged by foreign objects, which otherwise hinders the movement of the valve core.

In some embodiments, the valve core includes a first guide portion; the valve body includes a second guide portion; the second guide portion is located on an inner surface of the sidewall; and the first guide portion is in sliding fit with the second guide portion. The arrangement of the first guide portion and the second guide portion can guide the movement of the valve core, reducing the risk of the valve core deviating during switching between the first position and the second position, which otherwise hinders the movement of the valve core and causes failure in communication between the liquid inlet and the liquid outlet.

In some embodiments, the first guide portion is a protrusion protruding from a side of the piston portion facing the top wall; the second guide portion is a slide groove provided on the inner surface of the sidewall; and the protrusion is located between the sidewall and the sleeve portion. The protrusion protruding from the side of the piston portion facing the top wall can be integrally formed with the piston portion, and the slide groove provided on the inner surface of the sidewall can be integrally formed with the valve body, resulting in relatively low machining difficulty.

In some embodiments, the drain valve further includes a nut, where the nut is sleeved on the valve body, and the nut is threadedly connected to the sidewall; and a flange is formed at the end of the sidewall away from the top wall. A distance between the nut and the flange can be adjusted by screwing the nut, so that the drain valve is adapted to installation interfaces of different thicknesses, and the drain valve can be installed by screwing the nut, thereby making the installation process simple and convenient.

In some embodiments, the nut is provided with a plurality of notches, where the notch is in communication with the liquid inlet. This design allows leaked liquid water to pass through the notch and enter the valve body through the liquid inlet to be in contact with a water-soluble part, reducing the risk of the liquid inlet being blocked by the nut after the nut is screwed, which otherwise causes the liquid inlet to be closed and leads to failure of the drain valve.

In some embodiments, a plurality of liquid inlets are provided, and the plurality of liquid inlets are spaced apart along a circumferential direction of the sidewall. This design allows leaked liquid water to enter the valve body from multiple different directions to be in contact with the gas-generating substance, allowing the drain valve to be adapted to various liquid leakage conditions.

In some embodiments, the gas-generating substance is made of one of calcium peroxide, a mixture of an organic acid and a carbonate, and sodium azide.

According to a second aspect, this application provides a battery including a box and the drain valve according to the above embodiments, where the drain valve is installed on a wall of the box, and the drain valve is configured to discharge liquid within the box.

According to a third aspect, this application provides an electric device including the battery according to the above embodiments, where the battery is configured to provide electrical energy.

The above description is only an overview of the technical solutions of this application. To provide a clearer understanding of the technical means of this application, the solutions can be implemented in accordance with the content of the specification, and to make other objectives, features, and advantages of this application more apparent and understandable, specific embodiments of this application are described below.

### BRIEF DESCRIPTION OF DRAWINGS

Those of ordinary skill in the art will be clear about other advantages and benefits by reading the detailed description of the preferred embodiments below. The drawings are merely intended to illustrate the preferred embodiments and are not intended to limit this application. Throughout the drawings, the same reference signs represent the same components. In the drawings:
FIG. 1 is a schematic structural diagram of a vehicle according to some embodiments of this application;
FIG. 2 is an exploded view of a battery according to some embodiments of this application;
FIG. 3 is a cross-sectional view of a partial structure of a battery according to some embodiments of this application;
FIG. 4 is an exploded view of a drain valve according to some embodiments of this application;
FIG. 5 is a cross-sectional view of a partial structure of a battery according to some embodiments of this application, showing a position of a valve core at a second position;
FIG. 6 is a cross-sectional view of a partial structure of a battery according to some embodiments of this application, showing a position of a valve core at a first position;
FIG. 7 is a cross-sectional view of a partial structure of a battery according to some other embodiments of this application;
FIG. 8 is a cross-sectional view of a check member according to some embodiments of this application;
FIG. 9 is a perspective view of a valve core according to some embodiments of this application;
FIG. 10 is a cross-sectional view of a partial structure of a battery according to still some other embodiments of this application, showing a position of a valve core at a second position;
FIG. 11 is a cross-sectional view of a partial structure of a battery according to still some other embodiments of this application, showing a position of a valve core at a first position;
FIG. 12 is a perspective view of a valve core according to still some other embodiments of this application;
FIG. 13 is a perspective view of a valve body according to some embodiments of this application;
FIG. 14 is a perspective view of a nut according to some embodiments of this application;
FIG. 15 is a cross-sectional view of a partial structure of a battery according to yet still some other embodiments of this application, showing a position of a valve core at a second position; and
FIG. 16 is a cross-sectional view of a partial structure of a battery according to yet still some other embodiments of this application, showing a position of a valve core at a first position.

Reference signs in the specific embodiments are described as follows:
1000. vehicle; 300. motor; 200. controller; 100. battery; 11. box; 111. first portion; 112. second portion; 1121. peripheral wall; 1122. bottom wall; 12. battery cell; 13. drain valve; 131. valve body; 1311. liquid inlet; 1312. liquid outlet; 1314. top wall; 1315. sidewall; 13151. flange; 13152. slide groove; 1316. partition wall; 13161. communication port; 13162. first protrusion; 1317. second guide portion; 1318. nut; 13181. notch; 1319. sealing member; 13110 connecting portion; 1320. sealing ring; 132. valve core; 1321. piston portion; 13211. second protrusion; 1322. first guide portion; 1323. sleeve portion; 13221. protrusion; 13231. flow guide port; 13232. guide groove; 133. gas-generating substance; 134. elastic member; 135. check member; 1351. mounting hole; 13511. avoidance portion; 13512. rotational fitting portion; 1352. rotation portion; 1353. body portion; 136. protective member; 137. first chamber; 138. second chamber; and 139. gap.

### DESCRIPTION OF EMBODIMENTS

Embodiments of the technical solutions of this application will be described in detail below with reference to the drawings. The following embodiments are merely intended for a clearer description of the technical solutions of this application and therefore are used as just examples which do not constitute any limitations on the protection scope of this application.

Unless otherwise defined, all technical and scientific terms used herein have the same meaning as commonly understood by those skilled in the technical field of this application. The terms used herein are for the purpose of describing specific embodiments only and are not intended to limit this application. The terms "include", "have", and any variations thereof in the specification, claims, and the above description of the drawings of this application are intended to cover non-exclusive inclusion.

In the description of the embodiments of this application, the technical terms "first", "second", and the like are used only to distinguish different objects and should not be understood as indicating or implying relative importance or implicitly indicating the number, specific order, or primary-secondary relationship of the technical features indicated. In the description of the embodiments of this application, "a plurality of" means two or more, unless otherwise explicitly specified.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that the embodiments described herein can be combined with other embodiments.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientations or positional relationships shown in the drawings, and are merely for ease and brevity of description of the embodiments of this application rather than indicating or implying that the means or elements mentioned must have specific orientations or must be constructed or manipulated according to specific orientations, and therefore shall not be construed as any limitation on the embodiments of this application.

In the description of the embodiments of this application, unless otherwise explicitly specified and defined, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Those of ordinary skill in the art can understand the specific meanings of the above terms in the embodiments of this application based on specific circumstances.

In this application, a battery cell may include, but is not limited to, a lithium-ion secondary battery, a lithium-ion primary battery, a lithium-sulfur battery, a sodium-lithium-ion battery, a sodium-ion battery, or a magnesium-ion battery. The shape of the battery cell may include, but is not limited to, a cylinder, a flat body, a cuboid, or other shapes. Battery cells are typically classified by encapsulation method, including but not limited to cylindrical battery cells, prismatic battery cells, and pouch battery cells.

A battery mentioned in the embodiments of this application refers to a single physical module including one or more battery cells to provide higher voltage and capacity. The battery typically includes a box for encapsulating one or more battery cells. The box can reduce the risk of liquids or other foreign objects affecting the charging or discharging of the battery cells.

To improve the operational reliability and stability of the battery, a thermal management component is typically provided within the box. In some cases, the thermal management component is located at a bottom of the box and fixedly installed on a sidewall of the box. In some other cases, the thermal management component is located between adjacent battery cells and is attached to large surfaces of the battery cells. The battery cells are typically connected to the thermal management component through a thermally conductive adhesive, allowing for heat exchange between the battery cells and the thermal management component, so that the temperature of the battery cell in contact with the thermal management component changes as the temperature of the thermal management component changes.

Typically, the thermal management component contains a fluid capable of regulating temperatures of a plurality of battery cells, where the fluid may be a liquid or a gas, and temperature regulation refers to heating or cooling the plurality of battery cells. When cooling or dissipating heat from the battery cells, the thermal management component may be referred to as a cooling component, a cooling system, or a cooling plate, and the fluid accommodated in the thermal management component may be referred to as a cooling medium or a cooling fluid, more specifically, a coolant or a cooling gas. Additionally, the thermal management component can also be used for heating to increase the temperatures of the plurality of battery cells. Optionally, the fluid may flow in a circulating manner to achieve a better temperature regulation effect. Optionally, the fluid may be water, a mixture of water and ethylene glycol, or air.

The development of battery technology needs to consider multiple design factors simultaneously, for example, performance parameters such as energy density, cycle life, discharge capacity, and charge and discharge rates. Additionally, how to improve the reliability of batteries during use is also an issue that needs to be considered.

In an example where a drain valve is applied to a battery, during long-term use of the battery, factors such as poor circulation of a coolant in the battery, failure of a sealing member of a thermal management component due to aging, or damage to pipelines of the thermal management component may cause a heat exchange medium such as a coolant in the thermal management component to leak into a box. If the coolant accumulates in the box and cannot be discharged, the risk of a short circuit in the battery cell is increased. Once a short circuit occurs in the battery cell, the temperature of the battery increases, thus causing a fire in the battery, and resulting in low reliability of the battery during use.

In view of this, this application provides a drain valve. The drain valve includes a valve body, a valve core, a gas-generating substance, and a check member. The valve body has a liquid inlet and a liquid outlet. The valve core movably fits with the valve body to close the liquid outlet. The gas-generating substance is at least partially disposed within the valve body, and the gas-generating substance is configured to be able to react with liquid water to generate a gas so as to push the valve core to open the liquid outlet. The check member is configured to allow the liquid water to enter the valve body from the liquid inlet and restrict the gas from flowing out of the valve body through the liquid inlet. The gas-generating substance reacts with the liquid water to produce the gas, and the check member restricts the gas from flowing out of the valve body through the liquid inlet. As the gas increases, the pressure inside the valve body gradually increases, thereby pushing the valve core to move and open the liquid outlet, and allowing the liquid water to be discharged from a battery through the liquid outlet. This reduces the risk of leaked liquid water inside the battery causing a short circuit in a battery cell, which otherwise leads to an increase in the temperature of the battery and thus causes a fire in the battery, thereby improving the reliability of the battery during use.

The technical solutions described in the embodiments of this application are applicable to various apparatuses using batteries, such as electric bicycles, electric tools, electric vehicles, ships, and spacecrafts. For example, the spacecrafts include airplanes, rockets, space shuttles, and spaceships.

The following description is mainly provided by using an example in which a drain valve is applied to a battery, where the drain valve is configured to discharge a leaked liquid water coolant in a box of the battery.

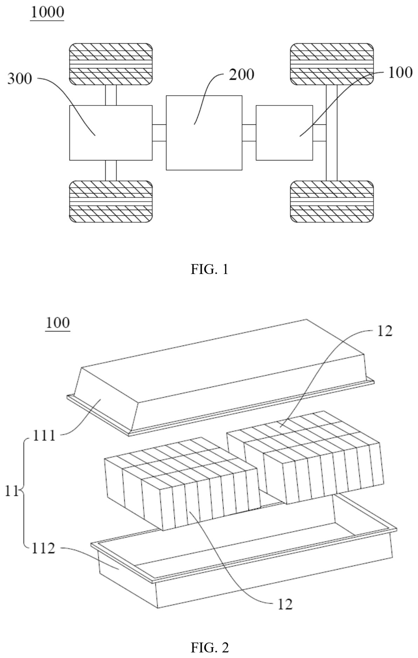

In some embodiments, referring to FIG. 1, a vehicle 1000 may be a fuel vehicle, a gas vehicle, or a new energy vehicle, where the new energy vehicle may be a battery electric vehicle, a hybrid electric vehicle, an extended-range vehicle, or the like. A controller 200, a motor 300, and a battery 100 may be provided in the vehicle 1000, where the controller 200 is configured to control the battery 100 to supply power to the motor 300. For example, the battery 100 may be disposed at the bottom, front, or rear of the vehicle 1000. The battery 100 may be configured to supply power to the vehicle 1000. For example, the battery 100 may be used as an operational power source for the vehicle 1000 which is configured for a circuit system of the vehicle 1000, for example, to satisfy power needs of start, navigation, and running of the vehicle 1000. In another embodiment of this application, the battery 100 can be used as not only the operational power source for the vehicle 1000, but also as a driving power source for the vehicle 1000, replacing or partially replacing fossil fuel or natural gas to provide driving traction for the vehicle 1000.

In some embodiments, referring to FIG. 2, to meet different power usage requirements, the battery 100 may include a plurality of battery cells 12. The plurality of battery cells 12 may be connected in series, in parallel, or series-parallel, where being connected in series-parallel means a combination of series and parallel connections. The battery 100 may also be referred to as a battery pack. The battery 100 may further include a box 11, where the box 11 is provided with a hollow structure inside. The plurality of battery cells 12 are accommodated within the box 11. The box 11 may include two portions referred to as a first portion 111 and a second portion 112 respectively, where the first portion 111 and the second portion 112 are fastened together. The shapes of the first portion 111 and the second portion 112 may be determined based on a combined shape of the plurality of battery cells 12. The first portion 111 and the second portion 112 may each have one face with an opening. For example, the first portion 111 and the second portion 112 may each be a hollow cuboid having only one face with an opening. The face with an opening of the first portion 111 and the face with an opening of the second portion 112 are disposed opposite each other; and the first portion 111 and the second portion 112 are fastened together to form the box 11 with a closed chamber. The plurality of battery cells 12 are connected in parallel, in series, or in series and parallel, and then put into the box 11 formed after the first portion 111 and the second portion 112 are snap-fitted.

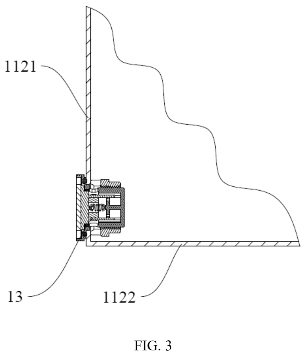

In some embodiments, referring to FIG. 3, the battery 100 may further include a drain valve 13. In an example where the drain valve 13 is disposed on the second portion 112, the second portion 112 may include a bottom wall 1122, with a peripheral wall 1121 surrounding an edge of the bottom wall 1122. An end face of the peripheral wall 1121 away from the bottom wall 1122 is a face with an opening. The first portion 111 covers the face with an opening to form the box 11 with the closed chamber. The drain valve 13 may be disposed on the bottom wall 1122 or the peripheral wall 1121. One or more drain valves 13 may be provided. A plurality of drain valves 13 may be disposed on the bottom wall 1122 and the peripheral wall 1121 respectively, or may be all disposed on the bottom wall 1122 or the peripheral wall 1121.

According to some embodiments of this application, referring to FIG. 2 and FIGs. 4 to 6, this application provides a drain valve 13 including a valve body 131, a valve core 132, a gas-generating substance 133, and a check member 135. The valve body 131 has a liquid inlet 1311 and a liquid outlet 1312. The valve core 132 movably fits with the valve body 131 to close the liquid outlet 1312. The gas-generating substance 133 is at least partially disposed within the valve body 131, and the gas-generating substance 133 is configured to react with liquid water to generate a gas so as to push the valve core 132 to open the liquid outlet 1312. The check member 135 is configured to allow the liquid water to enter the valve body 131 from the liquid inlet 1311 and restrict the gas from flowing out of the valve body 131 through the liquid inlet 1311.

For ease of description, when the drain valve 13 is in an open state, that is, the gas-generating substance 133 reacts with the liquid water to produce the gas so as to push the valve core 132 to open the liquid outlet 1312. In this case, the liquid inlet 1311 and the liquid outlet 1312 are in communication with each other, and a position of the valve core 132 is referred to as a first position. When the drain valve 13 is in a closed state, the communication between the liquid inlet 1311 and the liquid outlet 1312 is disabled, and a position of the valve core 132 is referred to as a second position.

The material of the valve body 131 includes, but is not limited to, plastic, martensitic stainless steel, iron, and the like.

The material of the valve core 132 includes, but is not limited to, plastic, martensitic stainless steel, iron, and the like.

One gas-generating substances 133 may be provided, such as a gas-generating substance 133 with a sleeve structure. Alternatively, a plurality of gas-generating substances 133 may be provided, which are columnar solids. The plurality of gas-generating substances 133 are filled within the valve body 131.

The gas-generating substance 133 may be a powdery solid or a solid with a regular shape.

The check member 135 may be made of a material that allows a liquid to pass through but restricts a gas from passing through. The check member 135 may include but is not limited to a polyvinyl alcohol film with low water solubility.

A plurality of liquid inlets 1311 may be provided.

At the first position, the liquid inlet 1311 and the liquid outlet 1312 being in communication with each other means that leaked liquid water inside the box 11 of the battery 100 can sequentially pass through the liquid inlet 1311 and the liquid outlet 1312 to be discharged outside the box 11. At the second position, the communication between the liquid inlet 1311 and the liquid outlet 1312 being disabled means that water or foreign objects outside the box 11 cannot pass through the liquid outlet 1312 and the liquid inlet 1311 to enter the box 11.

The gas-generating substance 133 is made of a material that can react with liquid water to produce a gas, and a material of the gas-generating substance 133 may include but is not limited to calcium oxide, a mixture of an organic acid and a carbonate, and sodium azide.

The gas generated by the reaction of the gas-generating substance 133 with the liquid water can increase the pressure inside the valve body 131. When the pressure inside the valve body 131 is greater than the pressure outside the valve body 131, the gas can push the valve core 132 to move toward the first position. Compared to a conventional method for opening the drain valve 13, a method for generating a gas upon contact with a liquid allows the drain valve 13 to be opened more rapidly, reducing the risk of excessive liquid water accumulation in the box 11 of the battery 100, which otherwise causes a short circuit in the battery cell 12.

In some embodiments, the valve body 131 includes a top wall 1314 and a sidewall 1315 surrounding the top wall 1314. The liquid inlet 1311 is provided on the top wall 1314. An end of the sidewall 1315 away from the top wall 1314 encloses the liquid outlet 1312. The gas-generating substance 133 is accommodated within the valve body 131. The valve core 132 is configured to close the liquid outlet 1312, and the valve core 132 is a disc-shaped valve core 132. The drain valve 13 further includes an elastic member 134, where one end of the elastic member 134 is connected to the valve core 132, and the other end of the elastic member 134 is connected to the valve body 131. An annular wall is provided on an inner side of a hole wall of the liquid outlet 1312. At the second position, under the action of the elastic member 134, the valve core 132 abuts against the annular wall to close the liquid outlet 1312. The drain valve 13 further includes a check member 135, where the check member 135 is located between the top wall 1314 and the valve core 132, and the check member 135 is configured to allow a liquid to enter the valve body 131 from the liquid inlet 1311 and restrict a gas from flowing out of the valve body 131.

In the technical solutions of the embodiments of this application, the drain valve 13 includes a valve body 131, a valve core 132, and a gas-generating substance 133. The valve body 131 has a liquid inlet 1311 and a liquid outlet 1312. The valve core 132 is configured to close the liquid outlet 1312. The gas-generating substance 133 is at least partially disposed within the valve body 131, and the gas-generating substance 133 is configured to react with liquid water to generate a gas so as to push the valve core 132 to open the liquid outlet 1312. In an example where the drain valve 13 is applied to the battery 100, the gas-generating substance 133 reacts with the liquid water to produce the gas, and the check member 135 restricts the gas from flowing out of the valve body 131 through the liquid inlet 1311. As the gas increases, the pressure inside the valve body 131 gradually increases, thereby pushing the valve core 132 to move and open the liquid outlet 1312, and allowing the liquid water to be discharged from the battery 100 through the liquid outlet 1312. This reduces the risk of leaked liquid water inside the battery 100 causing a short circuit in the battery cell 12, which otherwise leads to an increase in the temperature of the battery 100 and thus causes a fire in the battery 100, thereby improving the reliability of the battery 100 during use.

According to some embodiments of this application, the check member 135 is disposed on a path between the liquid inlet 1311 and the gas-generating substance 133.

The check member 135 being disposed on the path between the liquid inlet 1311 and the gas-generating substance 133 means that the liquid water can only be in contact with the gas-generating substance 133 after flowing through the check member 135 during flowing.

According to some embodiments of this application, referring to FIG. 2 and FIGs. 4 to 6, the drain valve 13 further includes an elastic member 134, where the elastic member 134 is connected to the valve core 132 and the valve body 131 and configured to apply an elastic force to the valve core 132 to maintain the valve core 132 at a position where the liquid outlet 1312 is closed.

The material of the elastic member 134 may be a metal spring or a non-metal spring.

At the second position, the provision of the elastic member 134 keeps the box 11 of the battery 100 in a relatively sealed state, reducing the possibility of water or foreign objects outside the box 11 entering the box 11.

At the second position, the elastic member 134 has certain initial tension, so that a restoring force of the elastic member 134 can maintain the valve core 132 at the second position.

In some embodiments, the valve body 131 includes a top wall 1314 and a sidewall 1315 surrounding the top wall 1314. The liquid inlet 1311 is provided on the sidewall 1315 and/or the top wall 1314. An end of the sidewall 1315 away from the top wall 1314 encloses the liquid outlet 1312. The valve body 131 further includes a partition wall 1316 and a connecting portion 13110, where the partition wall 1316 is located within a space enclosed by the top wall 1314 and the sidewall 1315, and the partition wall 1316 is spaced apart from the top wall 1314. The connecting portion 13110 connects the top wall 1314 and the partition wall 1316. A first chamber 137 is formed between the partition wall 1316 and the top wall 1314. The valve core 132 and the partition wall 1316 enclose a second chamber 138. A communication port 13161 is provided on the partition wall 1316. The valve core 132 includes a sleeve portion 1323 and a piston portion 1321, where the sleeve portion 1323 is sleeved on the partition wall 1316 and is in sliding fit with the partition wall 1316. The piston portion 1321 is connected to an end of the sleeve portion 1323 away from the top wall 1314, and the piston portion 1321 is configured to close or open the liquid outlet 1312. The sleeve portion 1323, the partition wall 1316, and the piston portion 1321 enclose the second chamber 138. A first protrusion 13162 is provided on a side of the partition wall 1316 facing the piston portion 1321. A second protrusion 13211 is provided on a side of the piston portion 1321 facing the partition wall 1316. One end of the elastic member 134 is connected to the first protrusion 13162, and the other end of the elastic member 134 is connected to the second protrusion 13211. One end of the elastic member 134 may be welded to the partition wall 1316, and the other end of the elastic member 134 may be welded to the piston portion 1321. In some other embodiments, one end of the elastic member 134 may be hooked onto the first protrusion 13162, and the other end of the elastic member 134 may be hooked onto the second protrusion 13211. In some embodiments, both the elastic member 134 and the gas-generating substance 133 are located within the valve body 131. The elastic member 134 is located between the partition wall 1316 and the piston portion 1321. The gas-generating substance 133 is a sleeve-shaped gas-generating substance 133. The elastic member 134 passes through the gas-generating substance 133.

In an example where the drain valve 13 is applied to the battery 100, when there is no liquid water leakage inside the battery 100, the elastic member 134 can maintain the valve core 132 at the position where the liquid outlet 1312 is closed. This reduces the risk of foreign objects or liquids outside the box 11 of the battery 100 entering the box 11 of the battery 100 and causing a short circuit in the battery cell 12, which otherwise leads to an increase in the temperature of the battery 100 and thus causes a fire in the battery 100.

According to some embodiments of this application, referring to FIG. 2 and FIGs. 4 to 6, the valve body 131 defines the first chamber 137 in communication with the liquid inlet 1311. The valve core 132 and the valve body 131 together define the second chamber 138. The valve body 131 is provided with the communication port 13161 for enabling a communication between the first chamber 137 and the second chamber 138. The gas-generating substance 133 is disposed in the second chamber 138.

The valve body 131 being provided with the communication port 13161 for enabling a communication between the first chamber 137 and the second chamber 138 means that the liquid can enter the second chamber 138 from the first chamber 137.

This design ensures that the liquid water can only enter the second chamber 138 through the communication port 13161 to react with the gas-generating substance 133 by flowing through at least the first chamber 137, thereby extending, to some extent, a flow path of the liquid water inside the drain valve 13 when the drain valve 13 is opened, and reducing the risk of accidental opening of the drain valve 13.

According to some embodiments of this application, referring to FIG. 2 and FIGs. 4 to 6, the check member 135 is disposed on a path between the first chamber 137 and the second chamber 138. The check member 135 is configured to allow the liquid water to flow from the first chamber 137 into the second chamber 138 and restrict the gas from flowing out of the second chamber 138.

The check member 135 may be configured to deform or flip during the process of a liquid entering the second chamber 138 from the liquid inlet 1311, thereby allowing the liquid to be in contact with the gas-generating substance 133 in the second chamber 138. When a gas generated by the gas-generating substance 133 when being in contact with the liquid flows toward the first chamber 137, the counterforce of the gas acts on the check member 135, allowing the check member 135 to close the second chamber 138, thereby restricting the gas from flowing out of the second chamber 138.

The check member 135 restricting the gas from flowing out of the second chamber 138 means that, in some cases, only a small portion of the gas generated by the gas-generating substance 133 may pass through the check member 135 and flow out of the chamber. During the continuous gas generation by the gas-generating substance 133, most of the gas will continue to fill the second chamber 138, causing the pressure in the second chamber 138 to be greater than the pressure outside the second chamber 138 and pushing the valve core 132 to move toward the first position.

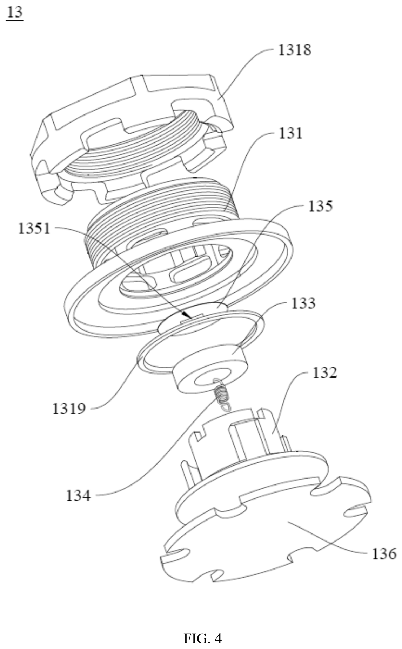

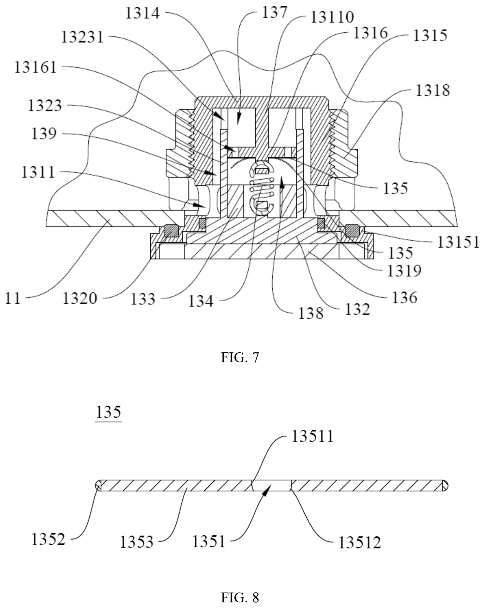

In some embodiments, referring to FIG. 4 and FIG. 7, the check member 135 is made of a flexible material that easily deforms under an external force, such as rubber. A central portion of the check member 135 is connected to the valve body 131, and an edge of the check member 135 is separated from the valve body 131. During the process of the liquid sequentially passing through the liquid inlet 1311 and the communication port 13161 to enter the second chamber 138, the gravity of the liquid causes the edge of the check member 135 to move toward a side close to the gas-generating substance 133, thereby allowing the liquid to flow into the second chamber 138 from a position between the check member 135 and the valve body 131. After the gas-generating substance 133 generates a gas when being in contact with a liquid, the gas tends to move upward and flow out of the second chamber 138. In this case, the gas causes an edge of the gas-generating substance 133 to move toward a side facing away from the gas-generating substance 133, thereby allowing the check member 135 to close the communication port 13161 and thus close the second chamber 138, and restricting the gas continuously generated by the gas-generating substance 133 from flowing out of the second chamber 138.

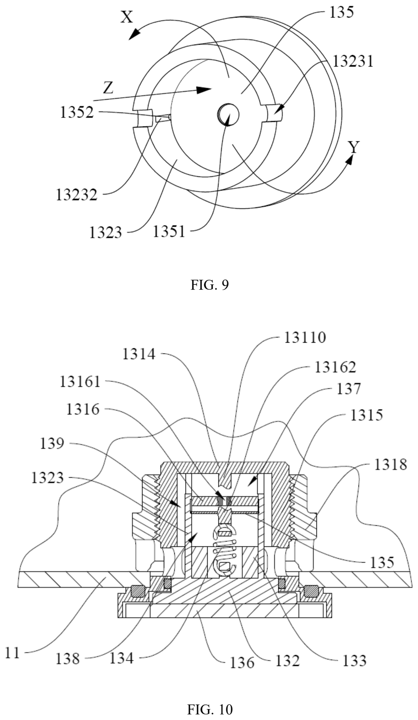

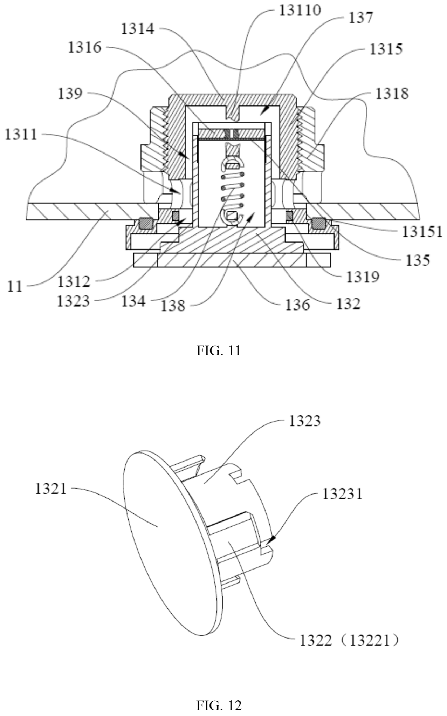

In some embodiments, referring to FIGs. 8 to 11, the valve body 131 includes a top wall 1314 and a sidewall 1315 surrounding the top wall 1314. The liquid inlet 1311 is provided on the sidewall 1315 and/or the top wall 1314. An end of the sidewall 1315 away from the top wall 1314 encloses the liquid outlet 1312. The valve body 131 further includes a partition wall 1316 and a connecting portion 13110, where the partition wall 1316 is located within a space enclosed by the top wall 1314 and the sidewall 1315, and the partition wall 1316 is spaced apart from the top wall 1314. The connecting portion 13110 connects the top wall 1314 and the partition wall 1316. The first chamber 137 is formed between the partition wall 1316 and the top wall 1314. The valve core 132 and the partition wall 1316 enclose the second chamber 138. The communication port 13161 is provided on the partition wall 1316. The valve core 132 includes a sleeve portion 1323 and a piston portion 1321, where the sleeve portion 1323 is sleeved on the partition wall 1316 and is in sliding fit with the partition wall 1316. The piston portion 1321 is connected to an end of the sleeve portion 1323 away from the top wall 1314, and the piston portion 1321 is configured to close or open the liquid outlet 1312. The sleeve portion 1323, the partition wall 1316, and the piston portion 1321 enclose the second chamber 138. The check member 135 includes a body portion 1353 and rotation portions 1352 disposed at two opposite ends of the body portion 1353. An outer diameter of the body portion 1353 is the same as an inner diameter of the sleeve portion 1323, and an outer edge of the body portion 1353 is tangent to an inner wall of the sleeve portion 1323. A guide groove 13232 is provided on a side of the piston portion 1321 facing the second chamber 138. The check member 135 is mounted on the valve core 132 through the cooperation of the rotation portions 1352 and the guide groove 13232. A mounting hole 1351 is provided at the center of the body portion 1353, where the mounting hole 1351 includes an avoidance portion 13511 and a rotational fitting portion 13512. The rotational fitting portion 13512 is closer to the gas-generating substance 133 than the avoidance portion 13511. A first protrusion 13162 is provided on a side of the partition wall 1316 facing away from the top wall 1314, and at least part of an outer peripheral surface of the first protrusion 13162 is a spherical surface tangent to the rotational fitting portion 13512. Referring to FIGs. 9 and 10, after a liquid sequentially passes through the liquid inlet 1311 and the communication port 13161 to enter the second chamber 138, the gravity of the liquid acts on an end of the check member 135 along a direction Z. One end of the check member 135 rotates along a direction X, and the other end of the check member 135 rotates along a direction Y, allowing the liquid to flow into the second chamber 138 along a surface of the check member 135 to be in contact with the gas-generating substance 133. After the gas-generating substance 133 generates a gas when being in contact with a liquid, the gas tends to flow out of the chamber through the communication port 13161. In this case, referring to FIGs. 7 and 11, the gas pushes the check member 135 to move toward the partition wall 1316 along the guide groove 13232, and the rotational fitting portion 13512 of the check member 135 is detached from the spherical surface of the first protrusion 13162 and moves toward the partition wall 1316 in a state of remaining attached to the peripheral surface of the first protrusion 13162. When the check member 135 is attached to a surface of a side of the partition wall 1316 facing the piston portion 1321, the check member 135 closes the communication port 13161, restricting the gas from flowing out of the chamber. As the gas generated by the gas-generating substance 133 increases, the valve core 132 is pushed to move toward the first position so as to open the drain valve 13.

With this design, in an example where the drain valve 13 is applied to the battery 100, the gas generated by the gas-generating substance 133 cannot flow out of the second chamber 138, allowing the pressure in the second chamber 138 to increase rapidly within a period of time, thereby shortening the time required for opening the drain valve 13.

According to some embodiments of this application, referring to FIG. 2 and FIGs. 4 to 6, the check member 135 is disposed at the communication port 13161.

The communication port 13161 may be a through hole running through a wall of the valve body 131, where the through hole may be a stepped hole, a plain hole, or the like.

A plurality of communication ports 13161 may be provided.

The check member 135 being disposed at the communication port 13161 means that, at the first position, the check member 135 closes the communication port 13161and restricts the gas from flowing out of the second chamber 138.

In some embodiments, the check member 135 is a one-way membrane, where the one-way membrane covers the communication port 13161 after adhered to the valve body 131.

This design allows the communication port 13161 to serve as a reference during the assembly of the check member 135, reducing the difficulty of assembling the check member 135.

According to some embodiments of this application, referring to FIGs. 4 to 6, the check member 135 is a one-way membrane covering the communication port 13161.

The one-way membrane may include but is not limited to a polyvinyl alcohol film with low water solubility.

In some embodiments, the valve body 131 includes a top wall 1314 and a sidewall 1315 surrounding the top wall 1314. The liquid inlet 1311 is provided on the sidewall 1315 and/or the top wall 1314. An end of the sidewall 1315 away from the top wall 1314 encloses the liquid outlet 1312. The valve body 131 further includes a partition wall 1316 and a connecting portion 13110, where the partition wall 1316 is located within a space enclosed by the top wall 1314 and the sidewall 1315, and the partition wall 1316 is spaced apart from the top wall 1314. The connecting portion 13110 connects the top wall 1314 and the partition wall 1316. The first chamber 137 is formed between the partition wall 1316 and the top wall 1314. The valve core 132 and the partition wall 1316 enclose the second chamber 138. The communication port 13161 is provided on the partition wall 1316. The valve core 132 includes a sleeve portion 1323 and a piston portion 1321, where the sleeve portion 1323 is sleeved on the partition wall 1316 and is in sliding fit with the partition wall 1316. The piston portion 1321 is connected to an end of the sleeve portion 1323 away from the top wall 1314, and the piston portion 1321 is configured to close or open the liquid outlet 1312. The sleeve portion 1323, the partition wall 1316, and the piston portion 1321 enclose the second chamber 138. A one-way membrane may be disposed on a side of the partition wall 1316 facing or facing away from the top wall 1314, and the one-way membrane covers the communication port 13161. In some other embodiments, a first protrusion 13162 is provided on a side of the partition wall 1316 facing away from the top wall 1314. A mounting hole 1351 fitting with the first protrusion 13162 is provided in the center of the one-way membrane. The one-way membrane can be positioned through the mounting hole 1351 and then assembled onto the first protrusion 13162.

This design allows the one-way membrane to be adhered near the communication port 13161 and cover the communication port 13161, thereby allowing the liquid water to flow from the first chamber 137 into the second chamber 138, and restricting the gas from flowing out of the second chamber 138. No additional assembly groove needs to be machined on a wall of the valve body 131 or valve core 132, so that the assembly difficulty is relatively low.

According to some embodiments of this application, referring to FIGs. 4 to 6, the valve body 131 includes a top wall 1314 and a sidewall 1315 surrounding the top wall 1314. The liquid inlet 1311 is provided on the sidewall 1315 and/or the top wall 1314. An end of the sidewall 1315 away from the top wall 1314 encloses the liquid outlet 1312.

The liquid inlet 1311 may be provided at any part of the sidewall 1315. With consideration that the provision of the liquid inlet 1311 at a lower position of the box 11 facilitates the discharge of leaked liquid water, the liquid inlet 1311 may be provided at the end of the sidewall 1315 away from the top wall 1314.

The liquid inlet 1311 may be a through hole, a stepped hole, an opening, or the like running through the sidewall 1315.

A plurality of liquid inlets 1311 may be provided, and opening areas of the plurality of liquid inlets 1311 may be the same or different.

The liquid inlet 1311 may be provided at any part of the top wall 1314, and the top wall 1314 and the sidewall 1315 may be each provided with the liquid inlet 1311.

This design allows the liquid inlet 1311 to be provided at any position along a circumferential direction of the sidewall 1315 and/or on the top wall 1314, allowing an opening direction of the liquid inlet 1311 to be flexibly arranged according to different products.

According to some embodiments of this application, referring to FIGs. 4 to 6, the valve body 131 further includes a partition wall 1316 and a connecting portion 13110, where the partition wall 1316 is located within a space enclosed by the top wall 1314 and the sidewall 1315. The partition wall 1316 is spaced apart from the top wall 1314. The connecting portion 13110 connects the top wall 1314 and the partition wall 1316. The first chamber 137 is formed between the partition wall 1316 and the top wall 1314. The valve core 132 and the partition wall 1316 enclose the second chamber 138. The communication port 13161 is provided on the partition wall 1316.

The partition wall 1316 is located within the space enclosed by the top wall 1314 and the sidewall 1315. The partition wall 1316 is spaced apart from the top wall 1314. The connecting portion 13110 connects the top wall 1314 and the partition wall 1316. The first chamber 137 is formed between the partition wall 1316 and the top wall 1314. The valve core 132 and the partition wall 1316 enclose the second chamber 138. The communication port 13161 is provided on the partition wall 1316. This means that the volume of the second chamber 138 is smaller than the volume of the space enclosed by the top wall 1314 and the sidewall 1315.

With this design, since the liquid inlet 1311 is provided on the sidewall 1315 and/or the top wall 1314 and the communication port 13161 is provided on the partition wall 1316, the liquid can only enter the second chamber 138 by sequentially passing through the liquid inlet 1311 and the communication port 13161, further extending a flow path required for the liquid to be in contact with the gas-generating substance 133 within the valve body 131, and reducing the risk of the drain valve 13 being opened due to a small amount of liquid in the box 11, which otherwise leads to an excessively short service life of the drain valve 13.

According to some embodiments of this application, referring to FIGs. 4 to 6, the valve core 132 includes a sleeve portion 1323 and a piston portion 1321. The sleeve portion 1323 is sleeved on the partition wall 1316 and is in sliding fit with the partition wall 1316. The piston portion 1321 is connected to an end of the sleeve portion 1323 away from the top wall 1314. The piston portion 1321 is configured to close or open the liquid outlet 1312. The sleeve portion 1323, the partition wall 1316, and the piston portion 1321 enclose the second chamber 138.

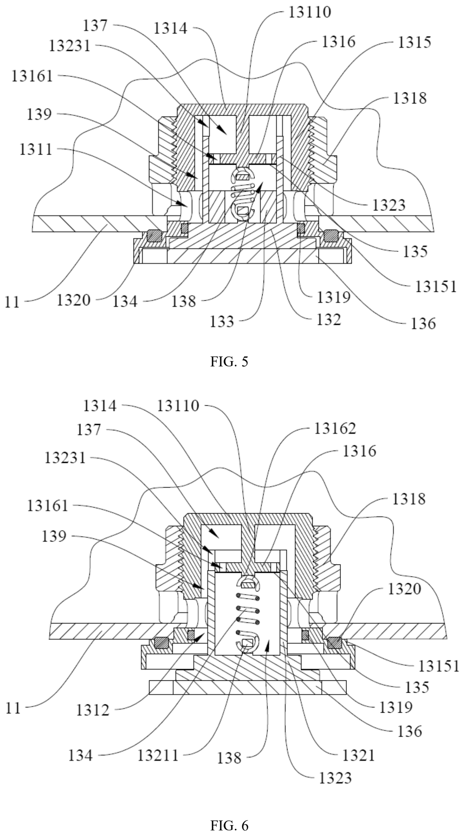

The sleeve portion 1323 is sleeved on the partition wall 1316 and is in sliding fit with the partition wall 1316; and the sleeve portion 1323, the partition wall 1316, and the piston portion 1321 enclose a chamber. In some embodiments, referring to FIG. 6, during the movement of the valve core 132 toward the first position, the chamber enclosed by the sleeve portion 1323, the partition wall 1316, and the piston portion 1321 remains in a closed state. At the first position, the pressure in the second chamber 138 balances with a restoring force of the elastic member 134, and the valve core 132 stops moving at the first position.

The sleeve portion 1323 is sleeved on the partition wall 1316 and is in sliding fit with the partition wall 1316; and the sleeve portion 1323, the partition wall 1316, and the piston portion 1321 enclose the second chamber 138. In some embodiments, at the second position, the sleeve portion 1323 abuts against the top wall 1314, or an outwardly protruding portion of an outer peripheral surface of the piston portion 1321 abuts against the sidewall 1315 to restrict the position of the valve core 132.

The sleeve portion 1323, the partition wall 1316, and the piston portion 1321 enclose the second chamber 138. This means that the volume of the second chamber 138 is smaller than the volume of the space enclosed by the top wall 1314 and the sidewall 1315.

This design makes a space of the second chamber 138 smaller than a space of the first chamber 137, reducing the time required for the gas to fill the second chamber 138 and push the valve core 132 to move, and allowing the valve core 132 to move faster and open the liquid outlet 1312. In an example where the drain valve 13 is applied to the battery 100, the opening time of the drain valve 13 is reduced, thereby reducing the risk of a short circuit in the battery cell 12 due to accumulation of a large amount of liquid within the box 11 of the battery 100 caused by an excessively long opening time of the drain valve 13.

According to some embodiments of this application, referring to FIGs. 4 to 6, a gap 139 is formed between an outer peripheral surface of the sleeve portion 1323 and an inner peripheral surface of the sidewall 1315. The sleeve portion 1323 is provided with a flow guide port 13231. The liquid inlet 1311 is provided on the sidewall 1315, and the liquid inlet 1311 is in communication with the first chamber 137 through the gap 139 and the flow guide port 13231.

After entering the valve body 131 through the liquid inlet 1311, the liquid water can only enter the second chamber 138 through the communication port 13161 by flowing a certain distance along the gap 139 and passing through the flow guide port 13231.

This design ensures that the liquid water can only enter the second chamber 138 by flowing through at least the liquid inlet 1311, the gap 139, the flow guide port 13231, and the communication port 13161, further extending a flow path required for the liquid water to react with the gas-generating substance 133 within the valve body 131, reducing the risk of the drain valve 13 being opened due to a small amount of liquid water in the box 11, which otherwise leads to an excessively short service life of the drain valve 13.

According to some embodiments of this application, referring to FIGs. 4 to 6, along a radial direction of the sleeve portion 1323, the piston portion 1321 protrudes from the outer peripheral surface of the sleeve portion 1323.

The piston portion 1321 protruding from the outer peripheral surface of the sleeve portion 1323 means that in an embodiment where part of the valve core 132 is located within the valve body 131, a liquid can enter the drain valve 13 through the liquid inlet 1311 and be discharged through the liquid outlet 1312. In other words, if the piston does not protrude from the outer peripheral surface of the sleeve portion 1323, for example, if the outer peripheral surface of the piston portion 1321 is coplanar with the outer peripheral surface of the sleeve portion 1323, after the piston portion 1321 closes the liquid outlet 1312, even if the piston portion 1321 moves away from a side of the top wall 1314, the liquid outlet 1312 can still be closed by the sleeve portion 1323, and the liquid inlet 1311 can only be in communication with the liquid outlet 1312 when the valve core 132 moves completely outside the valve body 131.

In this embodiment where part of the valve core 132 is located within the valve body 131, the liquid can enter the drain valve 13 through the liquid inlet 1311 and be discharged through the liquid outlet 1312, shortening the opening time of the drain valve 13.

With this design, in this embodiment where part of the valve core 132 is located within the valve body 131, the liquid can enter the drain valve 13 through the liquid inlet 1311 and be discharged through the liquid outlet 1312. During the normal drainage process of the drain valve 13, the opening time of the drain valve 13 is shortened, improving the drainage efficiency.

According to some embodiments of this application, referring to FIGs. 4 to 6, a sealing member 1319 is disposed between the outer peripheral surface of the piston portion 1321 and the inner peripheral surface of the sidewall 1315.

The material of the sealing member 1319 may include but is not limited to rubber.

A sealing method of the sealing member 1319 is radial sealing.

In some embodiments, the valve body 131 includes a top wall 1314 and a sidewall 1315 surrounding the top wall 1314. The liquid inlet 1311 is provided on the sidewall 1315. An end of the sidewall 1315 away from the top wall 1314 encloses the liquid outlet 1312. The valve body 131 includes a partition wall 1316 and a connecting portion 13110. The partition wall 1316 is located within a space enclosed by the top wall 1314 and the sidewall 1315, and the partition wall 1316 is disposed opposite the top wall 1314. The connecting portion 13110 connects the top wall 1314 and the partition wall 1316. The communication port 13161 is provided on the partition wall 1316. The valve core 132 includes a piston portion 1321 and a sleeve portion 1323, where the sleeve portion 1323 is sleeved on the partition wall 1316 and is in sliding fit with the partition wall 1316. The piston portion 1321 is connected to an end of the sleeve portion 1323 away from the top wall 1314, and the piston portion 1321 is configured to close or open the liquid outlet 1312. The sleeve portion 1323, the partition wall 1316, and the piston portion 1321 enclose a chamber. An annular wall is provided on an inner side of the liquid outlet 1312. To achieve sealing of the drain valve 13, an entire side of the annular wall facing the piston portion 1321 needs to have high flatness. At the second position, an entire surface of the piston portion 1321 in contact with the annular wall also needs to have high flatness. In some other embodiments, referring to the figures, the sealing member 1319 may be disposed on an inner surface of the sidewall 1315 to seal a gap between the inner surface of the sidewall 1315 and the outer peripheral surface of the piston portion 1321. That is, the above radial sealing method is a sealing method which requires machining only a portion of the inner peripheral surface of the sidewall 1315 and a portion of the outer peripheral surface of the piston portion 1321. That is, such method requires controlling the cylindricity of the inner peripheral surface of the sidewall 1315 and the cylindricity of the outer peripheral surface of the piston portion 1321, resulting in a small machining area and making high-precision machining relatively easy to implement.

This design requires only controlling the cylindricity of the piston portion 1321 without controlling the flatness of the piston portion 1321, resulting in a relatively small machining area and relatively low machining difficulty.

According to some embodiments of this application, referring to FIGs. 4 to 6, the drain valve 13 includes a protective member 136, where the protective member 136 is disposed on a side of the piston portion 1321 facing away from the top wall 1314.

In some embodiments, the protective member 136 may be adhered to the side of the piston portion 1321 facing away from the top wall 1314.

The material of the protective member 136 may be metal, including but not limited to stainless steel, aluminum, iron, and the like.

In an embodiment where the valve core 132 is made of plastic and the protective member 136 is made of metal, the protective member 136 is less likely to be damaged by impact or scratching from foreign objects compared to the valve core 132. In an example where the drain valve 13 is applied to the battery 100, an end of the battery 100 provided with the drain valve 13 is typically located outside the vehicle 1000. During running of the vehicle 1000, foreign objects such as metal pieces splashed from the road are likely to collide with the exposed drain valve 13, potentially penetrating the plastic drain valve 13. In some cases, there is a risk that the valve core 132 of the drain valve 13 is embedded with metal pieces, which otherwise hinders the movement of the valve core 132.

An edge of the protective member 136 may be provided with a plurality of through holes spaced apart, where the through holes run through the protective member 136. At the first position, after the liquid flows out from the liquid outlet 1312, the liquid can be discharged through the through holes. Additionally, the through holes serve as gripping positions for fingers during manual installation of the protective member 136.

This reduces the risk of the piston portion 1321 being scratched and damaged by foreign objects, which otherwise hinders the movement of the valve core 132.

According to some embodiments of this application, referring to FIGs. 4 to 6, FIG. 12, and FIG. 13, the valve core 132 includes a first guide portion 1322. The valve body 131 includes a second guide portion 1317. The second guide portion 1317 is located on the inner surface of the sidewall 1315. The first guide portion 1322 is in sliding fit with the second guide portion 1317.

Extension directions of the first guide portion 1322 and the second guide portion 1317 may be consistent with a movement direction of the valve core 132 when switching between the first position and the second position.

In some embodiments, the first guide portion 1322 may be a groove provided on an outer surface of the valve core 132. The second guide portion 1317 may be a guide block disposed on the inner surface of the sidewall 1315. The guide block is in sliding fit with the guide groove 13232.

A plurality of first guide portions 1322 may be provided. A plurality of second guide portions 1317 may be provided. The second guide portions 1317 are in one-to-one correspondence and sliding fit with the first guide portions 1322.

In some embodiments, the second guide portion 1317 may be welded to the inner surface of the sidewall 1315 or fastened to the inner surface of the sidewall 1315 by fasteners. The first guide portion 1322 may be welded to the piston portion 1321 or fastened to a body of the valve core 132 by fasteners.

In some embodiments, the first guide portion 1322 may be integrally formed with the valve core 132. The second guide portion 1317 may be integrally formed with the valve body 131.

The arrangement of the first guide portion 1322 and the second guide portion 1317 can guide the movement of the valve core 132, reducing the risk of the valve core 132 deviating during switching between the first position and the second position, which otherwise hinders the movement of the valve core and causes failure in communication between the liquid inlet 1311 and the liquid outlet 1312.

According to some embodiments of this application, referring to FIGs. 4 to 6, FIG. 12, and FIG. 13, the first guide portion 1322 is a protrusion 13221 protruding from a side of the piston portion 1321 facing the top wall 1314. The second guide portion 1317 is a slide groove 13152 provided on the inner surface of the sidewall 1315. The protrusion 13221 is located between the sidewall 1315 and the sleeve portion 1323.

In some embodiments, the liquid outlet 1312 is a hole with a circular cross-section. The piston portion 1321 is a disc-shaped sealing member. At the second position, the sealing member is at least partially located within the hole. An outer peripheral surface of the disc-shaped sealing member is attached to a wall of the hole.

In some embodiments, when the valve core 132 switches between the second position and the first position, at least part of the liquid inlet 1311 is not covered by the protrusion 13221, so that when the valve core 132 switches between the second position and the first position, the leaked liquid water can still be discharged.

The protrusion 13221 protruding from the side of the piston portion 1321 facing the top wall 1314 can be integrally formed with the piston portion 1321, and the slide groove 13152 provided on the inner surface of the sidewall 1315 can be integrally formed with the valve body 131, resulting in relatively low machining difficulty.

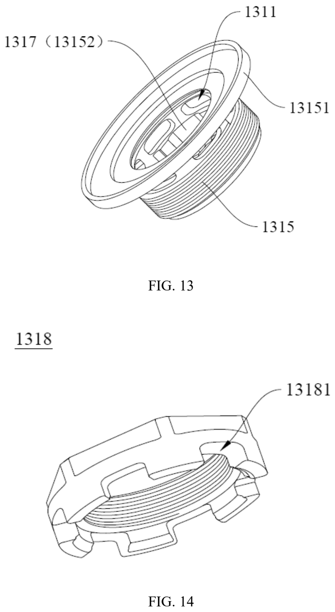

According to some embodiments of this application, referring to FIGs. 14 to 16, the drain valve 13 further includes a nut 1318, where the nut 1318 is sleeved on the valve body 131, and the nut 1318 is threadedly connected to the sidewall 1315. A flange 13151 is formed at the end of the sidewall 1315 away from the top wall 1314.

A distance between the nut 1318 and the flange 13151 can be adjusted by screwing the nut 1318, thereby allowing the drain valve 13 to be clamped to a wall of the box 11, where the wall of the box 11 is located between the nut 1318 and the flange 13151.

At least part of an outer surface of the sidewall 1315 is provided with threads fitting with the nut 1318.

Typically, the wall of the box 11 is provided with a through hole. The liquid inlet 1311 is located inside the box 11. The flange 13151 is located outside the box 11. During installation of the drain valve 13, a portion of the sidewall 1315 first passes through the through hole to be placed into the box 11, and the flange 13151 overlaps the wall portion; and then the nut 1318 is gripped by a tool or manually from an opening in a side of the box 11 facing away from the wall, inserted into the box 11, and then screwed onto the sidewall 1315. Finally, after the nut 1318 is tightened, the drain valve 13 is installed on the wall of the box 11.

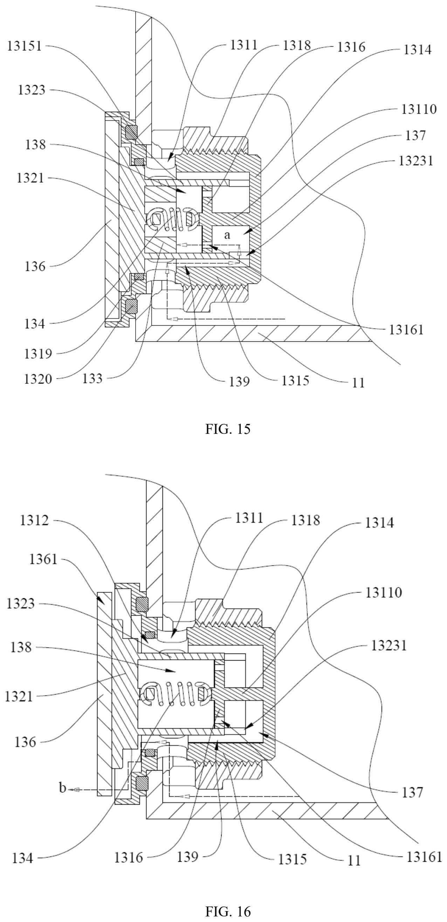

Referring to FIG. 15, a recess may be provided on a side of the flange 13151 facing the top wall 1314. A sealing ring 1320 is accommodated in the recess, where the sealing ring 1320 is used to seal the flange 13151 and the wall of the box 11, thereby reducing the risk of water or foreign objects outside the box 11 entering the box 11 and causing a short circuit in the battery cell 12.

A distance between the nut 1318 and the flange 13151 can be adjusted by screwing the nut 1318, so that the drain valve 13 is adapted to installation interfaces of different thicknesses, and the drain valve 13 can be installed by screwing the nut 1318, thereby making the installation process simple and convenient.

According to some embodiments of this application, referring to FIGs. 14 to 16, the nut 1318 is provided with a plurality of notches 13181, where the notch 13181 is in communication with the liquid inlet 1311.

In some embodiments, an end of the notch 13181 extends to an end of the nut 1318 close to the flange 13151.

In some embodiments, the notch 13181 may alternatively be disposed on a peripheral wall 1121 of the nut 1318 and run through the nut 1318.

The notch 13181 being in communication with the liquid inlet 1311 means that after the drain valve 13 is assembled, the liquid water can pass through the notch 13181 and the liquid inlet 1311 to enter the valve body 131, allowing the liquid water to be in contact with a water-soluble part.

This design allows leaked liquid water to pass through the notch 13181 and enter the valve body 131 through the liquid inlet 1311 to be in contact with the water-soluble part, reducing the risk of the liquid inlet 1311 being blocked by the nut 1318 after the nut 1318 is screwed, which otherwise causes the liquid inlet 1311 to be closed and leads to failure of the drain valve 13.

According to some embodiments of this application, referring to FIGs. 4, 15, and 16, a plurality of liquid inlets 1311 are provided, where the plurality of liquid inlets 1311 are spaced along a circumferential direction of the sidewall 1315.

The plurality of liquid inlets 1311 are provided, and the plurality of liquid inlets 1311 are spaced along the circumferential direction of the sidewall 1315. This means that leaked liquid water in various directions of the sidewall 1315 within the box 11 can flow a shorter distance to enter the chamber through the liquid inlet 1311, making the drainage of the drain valve 13 smoother.

This design allows leaked liquid water to enter the valve body 131 from multiple different directions to be in contact with the gas-generating substance 133, allowing the drain valve 13 to be adapted to various liquid leakage conditions.

According to some embodiments of this application, the gas-generating substance 133 is made of one of calcium peroxide, a mixture of an organic acid and a carbonate, and sodium azide.

According to some embodiments of this application, this application further provides a battery 100 including a box 11 and the drain valve 13 according to any of the above solutions, where the drain valve 13 is installed on a wall of the box 11, and the drain valve 13 is configured to discharge liquid within the box 11.

According to some embodiments of this application, this application further provides an electric device including the battery 100 according to any of the above solutions, where the battery 100 is configured to provide electrical energy to the electric device.

According to some embodiments of this application, referring to FIG. 2, FIG. 4, and FIGs. 12 to 16, this application provides a drain valve 13, where the drain valve 13 includes a valve body 131, a valve core 132, and a gas-generating substance 133. The valve body 131 has a liquid inlet 1311 and a liquid outlet 1312. The valve core 132 is configured to close the liquid outlet 1312.

The valve body 131 includes a top wall 1314 and a sidewall 1315 surrounding the top wall 1314. The liquid inlet 1311 is provided on the sidewall 1315 and/or the top wall 1314. A plurality of liquid inlets 1311 are provided, where the plurality of liquid inlets 1311 are spaced apart along a circumferential direction of the sidewall 1315. An end of the sidewall 1315 away from the top wall 1314 encloses the liquid outlet 1312. The valve body 131 further includes a partition wall 1316 and a connecting portion 13110, where the partition wall 1316 is located within a space enclosed by the top wall 1314 and the sidewall 1315, and the partition wall 1316 is spaced apart from the top wall 1314. The connecting portion 13110 connects the top wall 1314 and the partition wall 1316. A first chamber 137 is formed between the partition wall 1316 and the top wall 1314. The valve core 132 includes a sleeve portion 1323 and a piston portion 1321, where the sleeve portion 1323 is sleeved on the partition wall 1316 and is in sliding fit with the partition wall 1316. The piston portion 1321 is connected to an end of the sleeve portion 1323 away from the top wall 1314, and the piston portion 1321 is configured to close or open the liquid outlet 1312. The sleeve portion 1323, the partition wall 1316, and the piston portion 1321 enclose a second chamber 138. A communication port 13161 is provided on the partition wall 1316. A gap 139 is formed between an outer peripheral surface of the sleeve portion 1323 and an inner peripheral surface of the sidewall 1315. The sleeve portion 1323 is provided with a flow guide port 13231. The liquid inlet 1311 is provided on the sidewall 1315, and the liquid inlet 1311 is in communication with the first chamber 137 through the gap 139 and the flow guide port 13231. Along a radial direction of the sleeve portion 1323, the piston portion 1321 protrudes from the outer peripheral surface of the sleeve portion 1323.

The gas-generating substance 133 is disposed in the second chamber 138, and the gas-generating substance 133 is configured to be able to react with liquid water to generate a gas so as to push the valve core 132 to open the liquid outlet 1312.

The drain valve 13 further includes an elastic member 134. A first protrusion 13162 is provided on a side of the partition wall 1316 facing the piston portion 1321. A second protrusion 13211 is provided on a side of the piston portion 1321 facing the partition wall 1316. One end of the elastic member 134 is hooked onto the first protrusion 13162, and the other end of the elastic member 134 is hooked onto the second protrusion 13211.

The elastic member 134 is configured to apply an elastic force to the valve core 132 to maintain the valve core 132 at a position where the liquid outlet 1312 is closed.

The drain valve 13 further includes a check member 135, where the check member 135 is disposed on the partition wall 1316, and the check member 135 is located in the second chamber 138. The check member 135 is configured to allow the liquid water to flow from the first chamber 137 into the second chamber 138 and restrict the gas from flowing out of the second chamber 138. The check member 135 is a one-way membrane covering the communication port 13161.

A sealing member 1319 is disposed between an outer peripheral surface of the piston portion 1321 and the inner peripheral surface of the sidewall 1315.

The drain valve 13 includes a protective member 136, where the protective member 136 is disposed on a side of the piston portion 1321 facing away from the top wall 1314.

The valve core 132 includes a first guide portion 1322. The valve body 131 includes a second guide portion 1317. The second guide portion 1317 is located on an inner surface of the sidewall 1315. The first guide portion 1322 is in sliding fit with the second guide portion 1317. The first guide portion 1322 is a protrusion 13221 protruding from a side of the piston portion 1321 facing the top wall 1314. The second guide portion 1317 is a slide groove 13152 provided on the inner surface of the sidewall 1315. The protrusion 13221 is located between the sidewall 1315 and the sleeve portion 1323.

The drain valve 13 further includes a nut 1318, where the nut 1318 is sleeved on the valve body 131, and the nut 1318 is threadedly connected to the sidewall 1315. A flange 13151 is formed at the end of the sidewall 1315 away from the top wall 1314. The nut 1318 is provided with a plurality of notches 13181, where the notch 13181 is in communication with the liquid inlet 1311.

Referring to FIG. 15, at the second position, if a certain amount of liquid water leaks inside the box 11 of the battery 100, the liquid water sequentially flows through the liquid inlet 1311, the gap 139, the flow guide port 13231, the communication port 13161 along a path a, and passes through the check member 135 to enter a chamber. In this case, the gas-generating substance 133 reacts with a liquid to produce a gas, increasing the air pressure in the chamber, thereby pushing the valve core 132 to move toward the first position, that is, driving the piston portion 1321 to move in a direction facing away from the top wall 1314 which is a left direction in the figure. Referring to FIG. 16, when the pressure in the chamber balances with the elastic force of the elastic member 134, the valve core 132 is located at the first position. In this case, the liquid water sequentially flows through the liquid inlet 1311, the gap 139, and the liquid outlet 1312 along a path b to be discharged from the box 11 of the battery 100, achieving the discharge of the liquid water.

It should be noted that the above embodiments are only used to illustrate the technical solutions of this application and are not intended to limit them. Although this application has been described in detail with reference to the foregoing embodiments, those of ordinary skill in the art should understand that they may still modify the technical solutions described in the foregoing embodiments or make equivalent substitutions for some or all of the technical features. However, these modifications or substitutions do not cause the essence of the corresponding technical solutions to depart from the scope of the technical solutions of the embodiments of this application, and they should be included within the scope of the claims and specification of this application. In particular, as long as there is no structural conflict, the technical features mentioned in the embodiments can be combined in any manner. This application is not limited to the specific embodiments disclosed herein but includes all technical solutions falling within the scope of the claims.

## Claims

1. A drain valve, comprising:
a valve body having a liquid inlet and a liquid outlet;
a valve core movably fitting with the valve body to close the liquid outlet;
a gas-generating substance at least partially disposed within the valve body, wherein the gas-generating substance is configured to be able to react with liquid water to generate a gas so as to push the valve core to open the liquid outlet; and
a check member, wherein the check member is configured to allow the liquid water to enter the valve body from the liquid inlet and restrict the gas from flowing out of the valve body through the liquid inlet.

2. The drain valve according to claim 1, **characterized in that** the check member is disposed on a path between the liquid inlet and the gas-generating substance.

3. The drain valve according to claim 1 or 2, **characterized in that** the drain valve further comprises:
an elastic member connected to the valve core and the valve body and configured to apply an elastic force to the valve core to maintain the valve core at a position where the liquid outlet is closed.

4. The drain valve according to any one of claims 1 to 3, **characterized in that** the valve body defines a first chamber in communication with the liquid inlet; the valve core and the valve body together define a second chamber; the valve body is provided with a communication port for enabling a communication between the first chamber and the second chamber; and the gas-generating substance is disposed in the second chamber.

5. The drain valve according to claim 4, **characterized in that** the check member is disposed on a path between the first chamber and the second chamber, and the check member is configured to allow the liquid water to flow from the first chamber into the second chamber and restrict the gas from flowing out of the second chamber.

6. The drain valve according to claim 4 or 5, **characterized in that** the check member is disposed at the communication port.

7. The drain valve according to claim 4, 5, or 6, **characterized in that** the check member is a one-way membrane covering the communication port.

8. The drain valve according to any one of claims 4 to 7, **characterized in that** the valve body comprises a top wall and a sidewall surrounding the top wall; the liquid inlet is provided on the sidewall and/or the top wall; and an end of the sidewall away from the top wall encloses the liquid outlet.

9. The drain valve according to claim 8, **characterized in that** the valve body further comprises a partition wall and a connecting portion; the partition wall is located within a space enclosed by the top wall and the sidewall; the partition wall is spaced apart from the top wall; the connecting portion connects the top wall and the partition wall; the first chamber is formed between the partition wall and the top wall; the valve core and the partition wall enclose the second chamber; and the communication port is provided on the partition wall.

10. The drain valve according to claim 9, **characterized in that** the valve core comprises a sleeve portion and a piston portion; the sleeve portion is sleeved on the partition wall and is in sliding fit with the partition wall; the piston portion is connected to an end of the sleeve portion away from the top wall; the piston portion is configured to close or open the liquid outlet; and the sleeve portion, the partition wall, and the piston portion enclose the second chamber.

11. The drain valve according to claim 10, **characterized in that** a gap is formed between an outer peripheral surface of the sleeve portion and an inner peripheral surface of the sidewall; the sleeve portion is provided with a flow guide port; the liquid inlet is provided on the sidewall; and the liquid inlet is in communication with the first chamber through the gap and the flow guide port.

12. The drain valve according to claim 10 or 11, **characterized in that** along a radial direction of the sleeve portion, the piston portion protrudes from the outer peripheral surface of the sleeve portion.

13. The drain valve according to any one of claims 10 to 12, **characterized in that** a sealing member is disposed between an outer peripheral surface of the piston portion and the inner peripheral surface of the sidewall.

14. The drain valve according to any one of claims 10 to 13, **characterized in that** the drain valve comprises a protective member, and the protective member is disposed on a side of the piston portion facing away from the top wall.

15. The drain valve according to any one of claims 10 to 14, **characterized in that** the valve core comprises a first guide portion; the valve body comprises a second guide portion; the second guide portion is located on an inner surface of the sidewall; and the first guide portion is in sliding fit with the second guide portion.

16. The drain valve according to claim 15, **characterized in that** the first guide portion is a protrusion protruding from a side of the piston portion facing the top wall; the second guide portion is a slide groove provided on the inner surface of the sidewall; and the protrusion is located between the sidewall and the sleeve portion.

17. The drain valve according to any one of claims 8 to 16, **characterized in that** the drain valve further comprises a nut; the nut is sleeved on the valve body, and the nut is threadedly connected to the sidewall; and a flange is formed at the end of the sidewall away from the top wall.

18. The drain valve according to claim 17, **characterized in that** the nut is provided with a plurality of notches, wherein the notch is in communication with the liquid inlet.

19. The drain valve according to any one of claims 8 to 16, **characterized in that** a plurality of liquid inlets are provided, and the plurality of liquid inlets are spaced apart along a circumferential direction of the sidewall.

20. The drain valve according to any one of claims 1 to 19, **characterized in that** the gas-generating substance comprises at least one of calcium peroxide, a mixture of an organic acid and a carbonate, and sodium azide.

21. A battery, **characterized by** comprising:
a box; and
the drain valve according to any one of claims 1 to 20, **characterized in that** the drain valve is installed on a wall of the box, and the drain valve is configured to discharge liquid within the box.

22. An electric device, **characterized in that** the electric device comprises the battery according to claim 21, wherein the battery is configured to provide electrical energy.
